# EUROPEAN PATENT APPLICATION

(11) **EP 4 674 764 A1**
(43) Date of publication of application: **07.01.2026**
(21) Application number: 25178561.4
(22) Date of filing: 23.05.2025
(51) Int. Cl.: B64F 1/12, B64F 1/22, B64F 1/24, B64F 1/30

(54) **HIGH-CAPACITY DYNAMIC VERTIPORT**

(30) Priority: 05.07.2024 US 202418764969
(71) Applicant: The Boeing Company, Arlington, VA 22202 (US)
(72) Inventor: CLOTHIER, Reece Alexander, Arlington, 22202 (US); WILLIAMS, Brendan Patrick, Arlington, 22202 (US)
(74) Representative: Boult Wade Tennant LLP

(57) **Abstract**

A vertiport system includes a plurality of touchdown and lift-off (TLOF) platforms. The vertiport system also includes a final approach and take-off (FATO) area. The vertiport system also includes a driver configured to move the TLOF platforms with respect to the FATO area.

## Description

### Technical Field

The present teachings relate generally to a vertiport and, more particularly, to a high-capacity dynamic vertiport.

### Background

A vertiport is an area of land, water, or structure that is used for the landing, take-off, and movement of vertical takeoff and landing (VTOL)-capable aircraft. A VTOL-capable aircraft is one that can take off and land vertically without relying on a runway. This classification can include a variety of types of aircraft including helicopters, thrust-vectoring fixed-wing aircraft, and other hybrid aircraft with powered rotors such as cyclogyros/cyclocopters and gyrodynes.

A large network of vertiports capable of supporting a very high throughput of VTOL aircraft movements may help create a commercially viable advanced air mobility (AAM) sector. The commercial use cases for AAM require many of these vertiports to be located in urban or densely congested areas (e.g., on top of buildings, carparks, etc.). Adequate sites are likely to be limited and expensive. Consequently, vertiports in urban areas will need to make very efficient use of the smallest possible geographical footprint. In tension with this is the need for throughput. The commercial business case of both the AAM operator and vertiport operator/owner only closes if there is a very high throughput of operations. However, under conventional vertiport/heliport designs, the capacity is limited.

Constraints on the size of vertiports may also limit the amount of ground support and landside infrastructure available at a vertiport (e.g., the number of charging/re-fueling bays, passenger access gates, maintenance areas, etc.). Conventional vertiport/heliport designs limit accessibility to services and equipment, warranting the use of mobile equipment, and/or the use of inefficient taxi/walk ways. Aircraft may need to be wheeled or taxi between stations, adding to journey time and potentially restricting use and/or reducing capacity. Finally, airspace design requirements will define the final approach and take-off area (FATO) area(s) for a vertiport. These will be limited in number, creating another potential bottleneck on vertiport throughput and/or limit on capacity. Therefore, what is needed is an improved vertiport system and a method for using it.

### Summary

A vertiport system is disclosed in one example. The vertiport system includes a plurality of touchdown and lift-off (TLOF) platforms. The vertiport system also includes a final approach and take-off (FATO) area. The vertiport system also includes a driver configured to move the TLOF platforms with respect to the FATO area.

In some other examples, the vertiport system also includes a stationary terminal. The terminal is divided into a plurality of stations. The stations are circumferentially offset from one another around a central vertical axis through the terminal. The stations include a touchdown and lift-off (TLOF) station, an unloading station, a ground service station, and a loading station. The vertiport system also includes a plurality of TLOF platforms positioned adjacent to the terminal. The TLOF platforms are positioned radially-outward from the terminal and the stations with respect to the central vertical axis. Each TLOF platform is configured to be aligned with a different one of the stations. The vertiport system also includes a final approach and take-off (FATO) area positioned adjacent to the terminal. The FATO area is stationary. A first of the TLOF platforms is configured to initially be aligned with the TLOF station and in the FATO area. The first TLOF platform is configured to have a vertical takeoff and landing (VTOL) aircraft land thereon when the first TLOF platform is in the FATO area. The vertiport system also includes a driver configured to cause the TLOF platforms to move with respect to the terminal and the FATO area. The TLOF platforms move in a horizontal plane around the central vertical axis. The TLOF platforms move in a continuous or pulsed manner. The first TLOF platform moves from alignment with the TLOF station into alignment with the unloading station in response to a first rotational movement by the driver, which allows first passengers, first luggage, or first cargo to be unloaded from the VTOL aircraft into the unloading station of the terminal. The first TLOF platform moves from alignment with the unloading station of the terminal into alignment with the ground service station of the terminal in response to a second rotational movement by the driver, which allows ground service to be performed on the VTOL aircraft. The first TLOF platform moves from alignment with the ground service station of the terminal into alignment with the loading station of the terminal in response to a third rotational movement by the driver, which allows second passengers, second luggage, or second cargo to be loaded from the loading station of the terminal into the VTOL aircraft. The first TLOF platform moves from alignment with the loading station of the terminal back into alignment with the TLOF station of the terminal in response to a fourth rotational movement by the driver, which brings the first TLOF platform back into the FATO area. The VTOL aircraft is configured to take-off from the first TLOF platform when the first TLOF platform moves back into the FATO area.

A method for operating a vertiport system is also disclosed in another example. The method includes moving a touchdown and lift-off (TLOF) platform into alignment with a first station of a terminal. The TLOF platform is moved with a driver. The TLOF platform is within a final approach and take-off (FATO) area when the TLOF platform is aligned with the first station. The TLOF platform is one of a plurality of TLOF platforms that are adjacent to the terminal. The method also includes receiving a vertical takeoff and landing (VTOL) aircraft onto the TLOF platform when the TLOF platform is aligned with the first station and in the FATO area. The method also includes moving the TLOF platform from alignment with the first station of the terminal into alignment with a second station of the terminal. The method also includes unloading from the VTOL aircraft when the TLOF platform is aligned with the second station. The method also includes moving the TLOF platform from alignment with the second station of the terminal into alignment with a third station of the terminal. The method also includes performing ground service on the VTOL aircraft when the TLOF platform is aligned with the third station. The method also includes moving the first TLOF platform from alignment with the third station of the terminal into alignment with a fourth station of the terminal. The method also includes loading into the VTOL aircraft when the TLOF platform is aligned with the fourth station. The method also includes moving the TLOF platform from alignment with the fourth station of the terminal into alignment with the first station of the terminal. The method also includes causing the VTOL aircraft to take-off from the TLOF platform when the TLOF platform is aligned with the first station and in the FATO area.

### Brief Description of the Drawings

The above and/or other features and advantages will become more apparent and more readily appreciated from the following detailed description of examples, taken in conjunction with the accompanying drawings, in which:
Figure 1 illustrates a plan view of a vertiport system including a plurality of (e.g., four) touchdown and lift-off (TLOF) platforms.
Figure 2 illustrates a flowchart of a method for operating the vertiport system.
Figure 3 illustrates the vertiport system with the TLOF platforms rotated (e.g., 45 degrees or about 45 degrees).
Figure 4 illustrates the vertiport system with the TLOF platforms rotated (e.g., 90 degrees or about 90 degrees).

### Detailed Description

Examples will now be described more fully with reference to the accompanying drawings. Examples of the disclosure, however, can be embodied in many different forms and should not be construed as being limited to the examples set forth herein. Rather, these examples are provided so that this disclosure will be thorough and complete, and will fully convey the scope to those skilled in the art. In the drawings, some details may be simplified and/or may be drawn to facilitate understanding rather than to maintain strict structural accuracy, detail, and/or scale.

It will be understood that when an element is referred to as being "on," "associated with," "connected to," "electrically connected to," or "coupled to" to another component, it may be directly on, associated with, connected to, electrically connected to, or coupled to the other component or intervening components may be present. In contrast, when a component is referred to as being "directly on," "directly associated with," "directly connected to," "directly electrically connected to," or "directly coupled to" another component, there are no intervening components present. As used herein, the term "and/or" includes any and all combinations of one or more of the associated listed items.

It will be understood that although the terms first, second, etc., may be used herein to describe various elements, components, and/or directions, these elements, components, and/or directions should not be limited by these terms. These terms are only used to distinguish one element, component, and/or direction from another element, component, and/or direction. For example, a first element, component, or direction could be termed a second element, component, or direction without departing from the teachings of examples.

Spatially relative terms, such as "beneath," "below," "lower," "above," "upper," and the like may be used herein for ease of description to describe the relationship of one component and/or feature to another component and/or feature, or other component(s) and/or feature(s), as illustrated in the drawings. It will be understood that the spatially relative terms are intended to encompass different orientations of the device in use or operation in addition to the orientation(s) depicted in the figures.

The present disclosure includes a vertiport system (e.g., a vertihub, a vertiport, a vertistop, or a combination thereof) that enables the more efficient use of available physical space, airspace, and technical infrastructure. The design increases vertiport capacity (e.g., potential throughput of aircraft) for a smaller physical footprint and cost-effective use of limited ground equipment and services. More particularly, this may be achieved through "moveable" structural elements, the movement of which can be optimized for patterns of use or to enable greater access to limited services and/or infrastructure. This solves a challenge to the design and siting of vertiports, which may help to advance the emerging advance air mobility sector.

The vertiport system described herein includes a moveable design that enables more efficient use of a limited footprint and available ground support equipment and infrastructure. As described below, the vertiport system may include a final approach and take-off area (FATO), which is a defined area over which the pilot completes the final phase of the approach to a hover or a landing, and from which the pilot initiates take-off.

Conventional heliport and vertiport designs have a fixed gate and terminal area, which is linked to one or more touchdown and lift off (TLOF) area(s). The TLOF area may coincide with a FATO, or a FATO may be located a short distance away from the gate/terminal via a taxiway. Thus, the capacity of the conventional vertiport is fundamentally limited by the available space, which is designed for a "single occupancy" model. Capacity is directly proportional to the amount of available space. Increasing capacity requires an increase in the amount of space (e.g., additional FATOs, additional taxiway, apron, stand area, etc.).

Conventional designs also force a "sequential flow" of operations that is highly susceptible to disruption. For example, any delay to passenger embarkation or disembarkation, a late arrival, slow taxi, or broken-down aircraft, impacts the throughput of the entire vertiport. The tight energy reserves of AAM necessitates a highly predictable flight schedule, and any such delays at the vertiport (or reduction in planned capacity) has the potential cause significant and costly disruption across the entire AAM transportation network.

It is expected that vast numbers of vertiports will need to be located in densely populated and therefore costly and space-constrained areas. Existing designs are unlikely to be able to meet the capacity and dependability requirements needed for commercially sustainable AAM transport network.

The vertiport system may include a touchdown and lift-off area (TLOA), which is a load-bearing area surface on which the VTOL aircraft lands and/or takes off. The TLOA may be centered in the FATO. The vertiport system may include multiple moveable TLOFs. In this case, a TLOF becomes active when it coincides with one (or more) defined FATO.

The design includes a moveable infrastructure that makes optimum use of the available space. More particularly, the design makes optimum use of limited ground infrastructure (e.g., terminal, maintenance, charging, and/or fueling services) and airspace (e.g., limited FATO points).

The dynamic nature of the physical infrastructure allows for new opportunities to integrate vertiport operations with the broader airspace management system. For example, the vertiport can be pulsed and/or continuous - with the rate synchronized to needs of the broader network. In some other examples, the dynamic "pulse rate" of the vertiport can be automatically coupled to network demand and capacity management requirements determined by the air traffic management system.

The design has distinct advantages and could be used for either helicopter, eVTOL, and/or AAM aircraft. The advantages may include efficient use of space. More particularly, the design reduces the amount of space required for surface movement areas. The advantages also include higher capacity because the design supports greater capacity from a single FATO for the same corresponding ground footprint. The design may also enable more efficient surface operations by eliminating the need for aircraft to taxi and/or tow between gates, the TLOF, and the FATO. The design is also safer than conventional designs because it constrains passenger movement to non-operational phases and ensures physical separation between charging and other potentially hazardous surface activities. The advantages also include enhanced security because the design constrains passenger movement to certain areas. The advantages also include more efficient use of ground equipment because the design reduces the amount of ground infrastructure and services equipment required to service the same number of aircraft. The advantages also include ATM integration and network management because the design provides the ability to automatically synchronize vertiport movements and/or throughput with known schedule and/or slots, and network demand and capacity balancing actions. In turn, this drives greater predictability and reliability in on time departure and arrival performance across the route network. The advantages also include increased availability because the design reduces the impact of single aircraft breakdowns or delays on the operational performance of the vertiport.

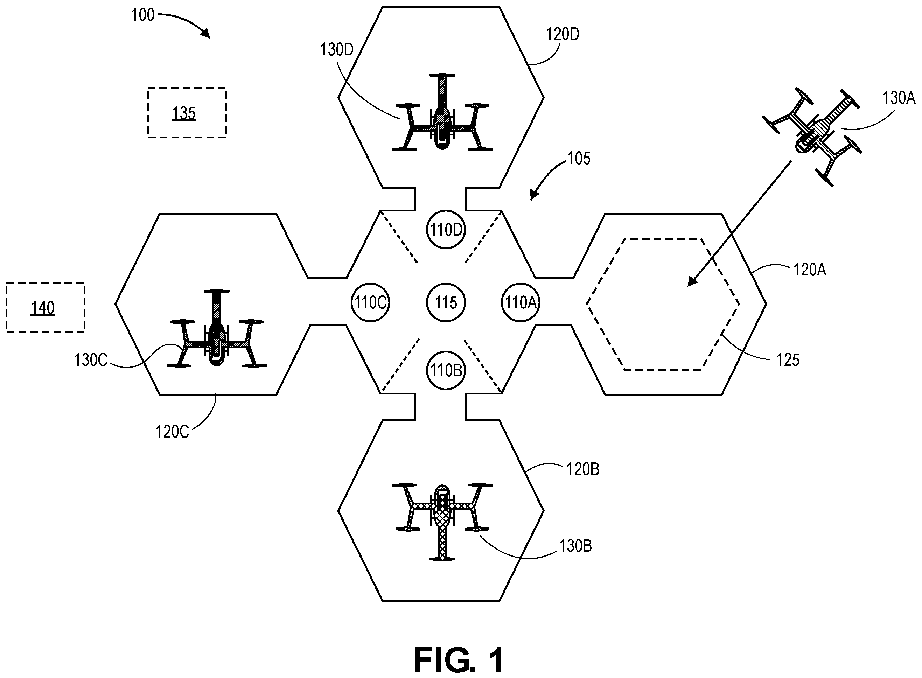

Figure 1 illustrates a plan view of a vertiport system 100. The vertiport system 100 may be used for any scale and/or complexity of space-constrained vertiport including vertistops, vertihub, and vertiports.

The vertiport system 100 may include a terminal 105. The terminal 105 may be stationary. The terminal may be divided into a plurality of (e.g., four) stations 110A-110D. The stations 110A-110D may be circumferentially offset from one another around a central vertical axis 115 through the terminal 105. In some examples, the stations 110A-110D may include a touchdown and lift-off (TLOF) station 110A, an unloading station 110B, a ground service station 110C, a loading station 110D, a hangarage station (not shown), or a combination thereof. The stations 110A-110D may be in this order proceeding in a rotational (e.g., clockwise) direction around the axis 115. As described below, the TLOF station 110A may facilitate touchdown and/or lift-off of a vertical takeoff and landing (VTOL) aircraft. The unloading station 110B may be where first passengers, first luggage, and/or cargo are unloaded from the VTOL aircraft. The ground service station 110C may be where ground service is performed on the VTOL aircraft. The loading station 110D may be where second (e.g., different) passengers, luggage, and/or cargo are loaded into the VTOL aircraft. In some examples, the terminal 105 may be omitted.

The vertiport system 100 may also include a plurality of (e.g., four) TLOF platforms 120A-120D. The TLOF platforms 120A-120D may be positioned adjacent to the terminal 105. The TLOF platforms 120A-120D may be positioned radially-outward from the terminal 105 and/or the stations 110A-110D with respect to the central vertical axis 115. Each TLOF platform 120A-120D may be configured to be aligned with a different one of the stations 110A-110D. The TLOF platforms 120A-120D may include landing and/or departure aids (e.g., lighting, approach navigational aids, departure navigational aids, etc.) or other ancillary equipment (e.g., general lighting) to meet regulatory or other requirements. In some other examples, these aids and/or other ancillary equipment may be positioned elsewhere in the vertiport system 100.

The vertiport system 100 may also include one or more final approach and take-off (FATO) areas (one is shown: 125). The FATO area 125 may be positioned adjacent to the terminal 105. The FATO area 125 may be stationary. A first of the TLOF platforms (e.g., TLOF platform 120A) may be configured to initially be aligned with the TLOF station 110A of the terminal 105. The first FLOF platform 120A may also or instead be positioned at least partially in the FATO area 125. The first TLOF platform 120A may be configured to have a vertical takeoff and landing (VTOL) aircraft 130A land thereon when the first TLOF platform 120A is in the FATO area 125.

The vertiport system 100 may also include a driver (e.g., a motor) 135 configured to cause the TLOF platforms 120A-120D to move with respect to the terminal 105 and/or the FATO area 125. The TLOF platforms 120A-120D may move in a horizontal plane around the central vertical axis 115 (e.g., in the clockwise direction). The TLOF platforms 120A-120D may also or instead move in a vertical direction and/or plane. The TLOF platforms 120A-120D may move in a continuous or pulsed manner. In some examples, the continuous manner may include the TLOF platforms 120A-120D moving in a circular path or substantially circular path at a rate of 1 meter per minute or about 1 meter per minute. In some examples, the pulsed manner may include the TLOF platforms 120A-120D remaining in alignment with one of the stations 110A-110D for a predetermined amount of time (e.g., 10 minutes), and then moving in a circular path or substantially circular path to the next station 110A-110D.

The first TLOF platform 120A may move from alignment with the TLOF station 110A of the terminal 105 into alignment with the unloading station 110B of the terminal 105 in response to a first rotational movement by the driver 135, which allows first passengers, first luggage, and/or first cargo to be unloaded from the VTOL aircraft 130A into the unloading station 110B of the terminal 105. The first TLOF platform 120A may also move from alignment with the unloading station 110B of the terminal 105 into alignment with the ground service station 110C of the terminal 105 in response to a second rotational movement by the driver 135, which allows ground service to be performed on the VTOL aircraft 130A. The first TLOF platform 120A may move from alignment with the ground service station 110C of the terminal 105 into alignment with the loading station 110D of the terminal 105 in response to a third rotational movement by the driver 135, which allows second passengers, second luggage, and/or second cargo to be loaded from the loading station 110D of the terminal 105 into the VTOL aircraft 130A. The first TLOF platform 120A may also move from alignment with the loading station 110D of the terminal 105 back into alignment with the TLOF station 110A of the terminal 105 in response to a fourth rotational movement by the driver 135, which brings the first TLOF platform 120A back into the FATO area 125. The VTOL aircraft 130A is configured to takeoff from the first TLOF platform 120A when the first TLOF platform 120A moves back into the FATO area 125.

The foregoing portions of the vertiport system 100 (e.g., the terminal 105, the TLOF platforms 120A-120D, the FATO area 125, the driver 135, or a combination thereof) may be referred to as the dynamic infrastructure. In some examples, the vertiport system 100 may also include a static area 140 positioned adjacent to the terminal 105 and/or the TLOF platform(s) 120A-120D. In some examples, including the example shown, the static area 140 is adjacent to the TLOF platform 120C. The static area 140 may be used to hold one or more VTOL aircraft if they need more time than is provided by the dynamic infrastructure described above. For example, if the VTOL aircraft 130A needs repairs that cannot be completed before cycling around back into the FATO area 125, then the VTOL aircraft 130A can be removed from the TLOF platform 120A and placed into the static area 140, where the repairs can be completed. Once the repairs are completed, the VTOL aircraft 130A can then be placed back onto the TLOF platform 120A.

In some examples, the removal of one of the VTOL aircraft from the dynamic infrastructure may be achieved by towing the VTOL aircraft between locations (e.g., from the TLOF platform 120A to the static area 140). In some other examples, the removal may be achieved by detaching the TLOF platform 120A with the VTOL aircraft 130A thereon and moving the platform 120A and aircraft 130A to the static area 140. A different TLOF (that was outside the dynamic infrastructure) may then be attached in place of the removed TLOF platform 120A. The newly attached TLOF platform may either have a new/different VTOL aircraft thereon or no aircraft thereon. Some examples may have both the detaching and/or attaching TLOF platforms and a separate hardstand area with ability to move aircraft between them. Some other examples may have the detaching and/or attaching TLOFs, or just the hardstand area: all in addition to the dynamic infrastructure as currently described (including the terminal 105).

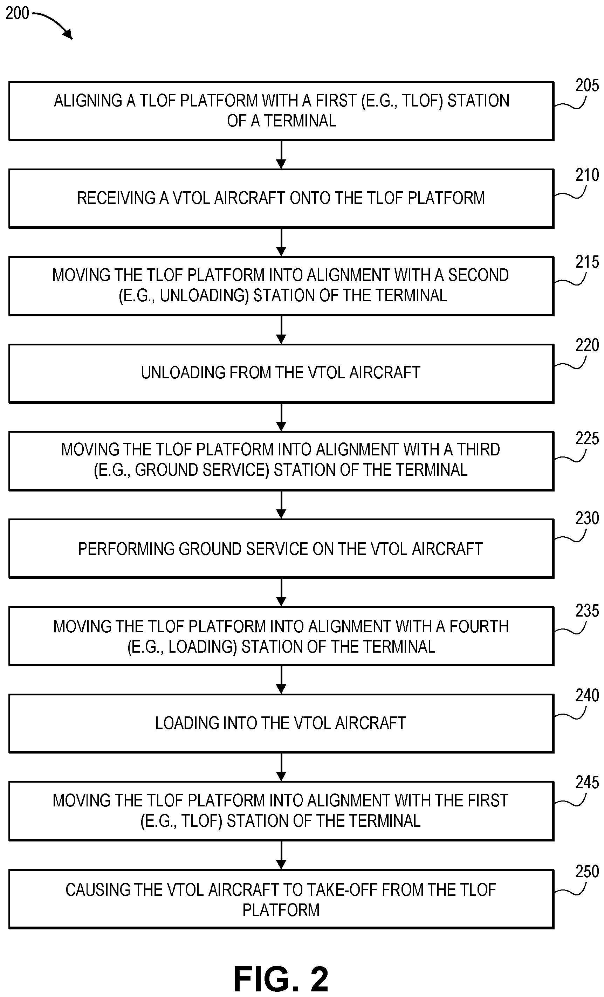

Figure 2 illustrates a flowchart of a method 200 for operating the vertiport system 100. An illustrative order of the method 200 is provided below; however, one or more steps of the method 200 may be performed in a different order, simultaneously, repeated, or omitted.

The method 200 may include aligning the first TLOF platform 120A with the first (e.g., TLOF) station 110A of the terminal 105, as at 205. This may also include aligning the second TLOF platform 120B with the second station 110B of the terminal 105, aligning the third TLOF platform 120C with the third station 110C of the terminal 105, and/or aligning the fourth TLOF platform 120D with the fourth station 110D of the terminal 105. In some examples, the first TLOF platform 120A may be in the FATO area 125 when the first TLOF platform 120A is aligned with the first station 110A.

The method 200 may also include receiving a first VTOL aircraft 130A onto the first TLOF platform 120A, as at 210. More particularly, the first VTOL aircraft 130A may land on the first TLOF platform 120A when the first TLOF platform 120A is in the FATO area 125. In some examples, a different VTOL aircraft (not shown) may be on the first TLOF platform 120A when the first TLOF platform 120A moves into the FATO area 125 and in alignment with the first (e.g., TLOF) station 110A, and the different VTOL aircraft may take-off from the first TLOF platform 120A just prior to the first VTOL aircraft 130A landing on the first TLOF platform 120A. The take-off and subsequent landing may both occur while the first TLOF platform 120A is/remains in the FATO area 125 and in alignment with the first (e.g., TLOF) station 110A. In some other examples, the first VTOL aircraft 130A may land on an unoccupied TLOF station when it reaches the FATO area 125 on a subsequent cycle.

In some examples, the second TLOF platform 120B may have a second VTOL aircraft 130B positioned thereon, the third TLOF platform 120C may have a third VTOL aircraft 130C positioned thereon, and/or the fourth TLOF platform 120D may have a fourth VTOL aircraft 130D positioned thereon. However, the VTOL aircrafts 130A-130D may only land and/or take-off from their corresponding TLOF platform 120A-120D when the TLOF platform 120A-120D is in the FATO area 125. As a result, in some examples including this example, only one VTOL aircraft 130A-130D may land and/or take-off at a time.

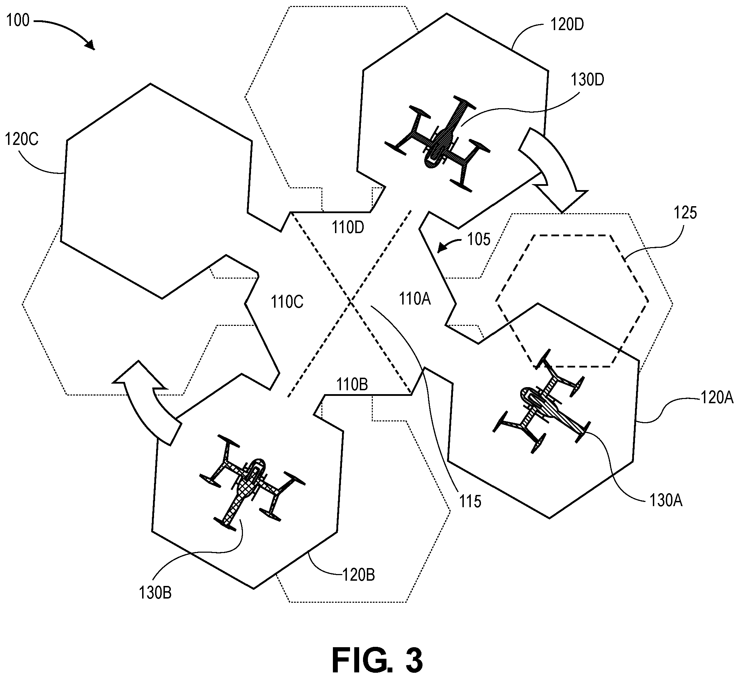

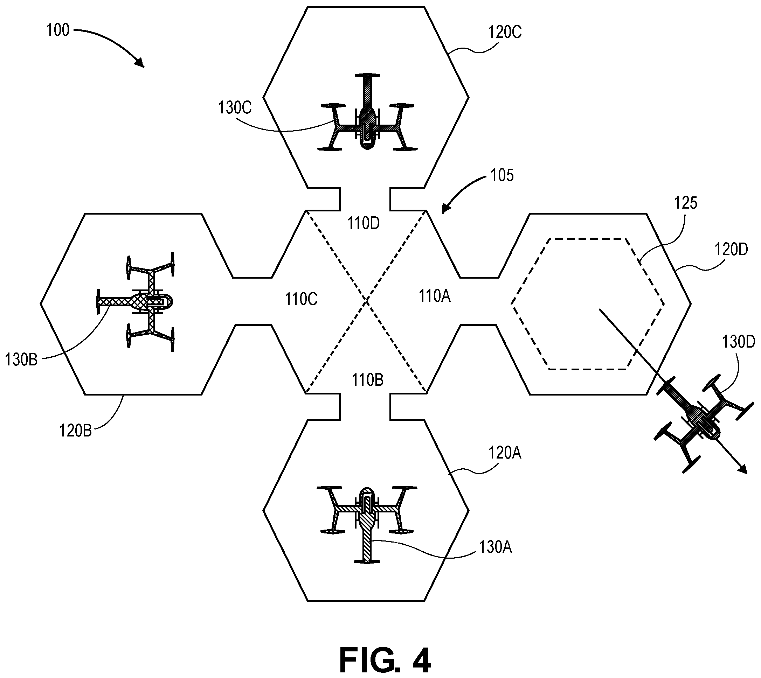

The method 200 may also include moving the first TLOF platform 120A from alignment with the first (e.g., TLOF) station 110A of the terminal 105 into alignment with the second (e.g., unloading) station 110B of the terminal 105, as at 215. Figure 3 illustrates this movement, and Figure 4 illustrates the completion of this movement, with the first TLOF platform 120A in alignment with the second (e.g., unloading) station 110B of the terminal 105.

This may also or instead (e.g., simultaneously) include moving the second TLOF platform 120B from alignment with the second (e.g., unloading) station 110B of the terminal 105 into alignment with the third (e.g., ground service) station 110C of the terminal 105, moving the third TLOF platform 120C from alignment with the third (e.g., ground service) station 110C of the terminal 105 into alignment with the fourth (e.g., loading) station 110D of the terminal 105, moving the fourth TLOF platform 120D from alignment with the fourth (e.g., loading) station 110D of the terminal 105 into alignment with the first (e.g., TLOF) station 110A of the terminal 105, or a combination thereof. More particularly, the driver 135 may generate a first rotational movement, which may cause the TLOF platforms 120A-120D to move/rotate (e.g., 90 degrees) around the axis 115. In some examples , the platforms 120A-120D may move along a (e.g., circular) track and/or rail that is positioned below the platforms 120A-120D. In some other examples, the platforms 120A-120D may move on one or more wheels that are positioned therebelow.

The method 200 may also include unloading from the first VTOL aircraft 130A, as at 220. More particularly, first passengers, first luggage, and/or first cargo may be unloaded from the first VTOL aircraft 130A onto the first TLOF platform 120A, and then into the second (e.g., unloading) station 110B of the terminal 105 when the first TLOF platform is aligned with the second (e.g., unloading) station 110B of the terminal 105.

The method 200 may also include moving the first TLOF platform 120A from alignment with the second (e.g., unloading) station 110B of the terminal 105 into alignment with the third (e.g., ground service) station 110C of the terminal 105, as at 225. This may also or instead (e.g., simultaneously) include moving the second TLOF platform 120B from alignment with the third (e.g., ground service) station 110C of the terminal 105 into alignment with the fourth (e.g., loading) station 110D of the terminal 105, moving the third TLOF platform 120C from alignment with the fourth (e.g., loading) station 110D of the terminal 105 into alignment with the first (e.g., TLOF) station 110A of the terminal 105, moving the fourth TLOF platform 120D from alignment with the first (e.g., TLOF) station 110A of the terminal 105 into alignment with the second (e.g., unloading) station 110B of the terminal 105, or a combination thereof. More particularly, the driver 135 may generate a second rotational movement, which may cause the TLOF platforms 120A-120D to move/rotate (e.g., 90 degrees) around the axis 115.

The method 200 may also include performing ground service on the first VTOL aircraft 130A, as at 230. More particularly, the first VTOL aircraft 130A may be inspected, repaired, refueled, recharged, etc. when the first TLOF platform 120A is in alignment with the third (e.g., ground service) station 110C of the terminal 105.

The method 200 may also include moving the first TLOF platform 120A from alignment with the third (e.g., ground service) station 110C of the terminal 105 into alignment with the fourth (e.g., loading) station 110D of the terminal 105, as at 235. This may also or instead (e.g., simultaneously) include moving the second TLOF platform 120B from alignment with the fourth (e.g., loading) station 110D of the terminal 105 into alignment with the first (e.g., TLOF) station 110A of the terminal 105, moving the third TLOF platform 120C from alignment with the first (e.g., TLOF) station 110A of the terminal 105 into alignment with the second (e.g., unloading) station 110B of the terminal 105, moving the fourth TLOF platform 120D from alignment with the second (e.g., unloading) station 110B of the terminal 105 into alignment with the third (e.g., ground service) station 110C of the terminal 105, or a combination thereof. More particularly, the driver 135 may generate a third rotational movement, which may cause the TLOF platforms 120A-120D to move/rotate (e.g., 90 degrees) around the axis 115.

The method 200 may also include loading into the first VTOL aircraft, as at 240. More particularly, second passengers, second luggage, and/or second cargo may be loaded into the first VTOL aircraft 130A when the first TLOF platform 120A is aligned with the fourth (e.g., loading) station 110D of the terminal 105.

The method 200 may also include moving the first TLOF platform 120A from alignment with the fourth (e.g., loading) station 110D of the terminal 105 into alignment with the first (e.g., TLOF) station 110A of the terminal 105, as at 245. This may also or instead (e.g., simultaneously) include moving the second TLOF platform 120B from alignment with the first (e.g., TLOF) station 110A of the terminal 105 into alignment with the second (e.g., unloading) station 110B of the terminal 105, moving the third TLOF platform 120C from alignment with the second (e.g., unloading) station 110B of the terminal 105 into alignment with the third (e.g., ground service) station 110C of the terminal 105, moving the fourth TLOF platform 120D from alignment with the third (e.g., ground service) station 110C of the terminal 105 into alignment with the fourth (e.g., loading) station 110D of the terminal 105, or a combination thereof. More particularly, the driver 135 may generate a fourth rotational movement, which may cause the TLOF platforms 120A-120D to move/rotate (e.g., 90 degrees) around the axis 115.

The method 200 may also include causing the first VTOL aircraft 130A to take-off from the first TLOF platform 120A, as at 250. More particularly, the first VTOL aircraft 130A may take-off from the first TLOF platform 120A when the first TLOF platform 120A is in the FATO area 125.

### Clauses

Clause 1 - A vertiport system, comprising: a plurality of touchdown and lift-off (TLOF) platforms; a final approach and take-off (FATO) area; and a driver configured to move the TLOF platforms with respect to the FATO area.

Clause 2 - The vertiport system of clause 1, further comprising a terminal, wherein the TLOF platforms move in a horizontal plane around the terminal.

Clause 3 - The vertiport system of clause 1 or clause 2, wherein the terminal is divided into a plurality of stations, and wherein the stations are circumferentially offset from one another around a central vertical axis through the terminal.

Clause 4 - The vertiport system of any one of clauses 1-3, wherein the TLOF platforms are positioned radially-outward from the terminal and the stations with respect to the central vertical axis, and wherein each TLOF platform is configured to be aligned with a different one of the stations.

Clause 5 - The vertiport system of any one of clauses 1-4, wherein the stations comprise a touchdown and lift-off (TLOF) station, an unloading station, a ground service station, and a loading station.

Clause 6 - The vertiport system of any one of clauses 1-5, wherein the stations comprise a touchdown and lift-off (TLOF) station, wherein the driver is configured to move a first of the TLOF platforms into alignment with the TLOF station and simultaneously into the FATO area, and wherein the first TLOF platform is configured to have a vertical takeoff and landing (VTOL) aircraft land thereon when the first TLOF platform is in the FATO area.

Clause 7 - The vertiport system of any one of clauses 1-6, wherein the stations comprise an unloading station, wherein the driver is configured to move a first of the TLOF platforms into alignment with the unloading station, which allows passengers, luggage, or cargo to be unloaded from a vertical takeoff and landing (VTOL) aircraft, onto the first TLOF platform, and then into the unloading station.

Clause 8 - The vertiport system of any one of clauses 1-7, wherein the stations comprise a ground service station, wherein the driver is configured to move a first of the TLOF platforms into alignment with the ground service station, which allows ground service to be performed on a vertical takeoff and landing (VTOL) aircraft that is positioned on the first TLOF platform.

Clause 9 - The vertiport system of any one of clauses 1-8, wherein the stations comprise a loading station, wherein the driver is configured to move a first of the TLOF platforms into alignment with the loading station, which allows passengers, luggage, or cargo to be loaded from the loading station into a vertical takeoff and landing (VTOL) aircraft that is positioned on the first TLOF platform.

Clause 10 - The vertiport system of any one of clauses 1-9, wherein the stations comprise a touchdown and lift-off (TLOF) station, wherein the driver is configured to move a first of the TLOF platforms into alignment with the TLOF station and simultaneously into the FATO area, and wherein the first TLOF platform is configured to have a vertical takeoff and landing (VTOL) aircraft take-off therefrom when the first TLOF platform is in the FATO area.

Clause 11 - A vertiport system, comprising: a stationary terminal, wherein the terminal is divided into a plurality of stations, wherein the stations are circumferentially offset from one another around a central vertical axis through the terminal, and wherein the stations comprise a touchdown and lift-off (TLOF) station, an unloading station, a ground service station, and a loading station; a plurality of TLOF platforms positioned adjacent to the terminal, wherein the TLOF platforms are positioned radially-outward from the terminal and the stations with respect to the central vertical axis, and wherein each TLOF platform is configured to be aligned with a different one of the stations; a final approach and take-off (FATO) area positioned adjacent to the terminal, wherein the FATO area is stationary, wherein a first of the TLOF platforms is configured to initially be aligned with the TLOF station and in the FATO area, and wherein the first TLOF platform is configured to have a vertical takeoff and landing (VTOL) aircraft land thereon when the first TLOF platform is in the FATO area; and a driver configured to cause the TLOF platforms to move with respect to the terminal and the FATO area, wherein the TLOF platforms move in a horizontal plane around the central vertical axis, wherein the TLOF platforms move in a continuous or pulsed manner, wherein the first TLOF platform moves from alignment with the TLOF station into alignment with the unloading station in response to a first rotational movement by the driver, which allows first passengers, first luggage, or first cargo to be unloaded from the VTOL aircraft into the unloading station of the terminal, wherein the first TLOF platform moves from alignment with the unloading station of the terminal into alignment with the ground service station of the terminal in response to a second rotational movement by the driver, which allows ground service to be performed on the VTOL aircraft, wherein the first TLOF platform moves from alignment with the ground service station of the terminal into alignment with the loading station of the terminal in response to a third rotational movement by the driver, which allows second passengers, second luggage, or second cargo to be loaded from the loading station of the terminal into the VTOL aircraft, wherein the first TLOF platform moves from alignment with the loading station of the terminal back into alignment with the TLOF station of the terminal in response to a fourth rotational movement by the driver, which brings the first TLOF platform back into the FATO area, and wherein the VTOL aircraft is configured to take-off from the first TLOF platform when the first TLOF platform moves back into the FATO area.

Clause 11A - A vertiport system, comprising: a stationary terminal, wherein the terminal is divided into a plurality of stations, wherein the stations are circumferentially offset from one another around a central vertical axis through the terminal, and wherein the stations comprise a touchdown and lift-off (TLOF) station, an unloading station, a ground service station, and a loading station; a plurality of TLOF platforms positioned adjacent to the terminal, wherein the TLOF platforms are positioned radially-outward from the terminal and the stations with respect to the central vertical axis, and wherein each TLOF platform is configured to be aligned with a different one of the stations; a final approach and take-off (FATO) area positioned adjacent to the terminal, wherein the FATO area is stationary, wherein a first of the TLOF platforms is configured to initially be aligned with the TLOF station and in the FATO area, and wherein the first TLOF platform is configured to have a vertical takeoff and landing (VTOL) aircraft land thereon when the first TLOF platform is in the FATO area; and a driver configured to cause the TLOF platforms to move with respect to the terminal and the FATO area, wherein the TLOF platforms move in a horizontal plane around the central vertical axis, wherein the TLOF platforms move in a continuous or pulsed manner, wherein the first TLOF platform moves from alignment with the TLOF station into alignment with the unloading station in response to a first rotational movement by the driver, which allows first passengers, first luggage, or first cargo to be unloaded from the VTOL aircraft into the unloading station of the terminal, wherein the first TLOF platform moves from alignment with the unloading station of the terminal into alignment with the ground service station of the terminal in response to a second rotational movement by the driver, which allows ground service to be performed on the VTOL aircraft, wherein the first TLOF platform moves from alignment with the ground service station of the terminal into alignment with the loading station of the terminal in response to a third rotational movement by the driver, which allows second passengers, second luggage, or second cargo to be loaded from the loading station of the terminal into the VTOL aircraft, wherein the first TLOF platform moves from alignment with the loading station of the terminal back into alignment with the TLOF station of the terminal in response to a fourth rotational movement by the driver, which brings the first TLOF platform back into the FATO area, and optionally wherein the VTOL aircraft is configured to take-off from the first TLOF platform when the first TLOF platform moves back into the FATO area.

Clause 12 - The vertiport system of clause 11 or clause 11A, wherein voids are defined between each adjacent pair of the TLOF platforms.

Clause 13 - The vertiport system of clause 11, clause 11A or clause 12, wherein the TLOF platforms are part of a single disk with no voids therebetween.

Clause 14 - The vertiport system of any one of clauses 11-13 or clause 11A, wherein the TLOF platforms, or sub-components thereof, are also configured to move vertically to facilitate loading and unloading.

Clause 15 - The vertiport system of any one of clauses 11-14 or clause 11A, wherein the TLOF platforms comprise equipment to refuel or recharge the VTOL aircraft.

Clause 16 - A method for operating a vertiport system, the method comprising: moving a touchdown and lift-off (TLOF) platform into alignment with a first station of a terminal, wherein the TLOF platform is moved with a driver, wherein the TLOF platform is within a final approach and take-off (FATO) area when the TLOF platform is aligned with the first station, and wherein the TLOF platform is one of a plurality of TLOF platforms that are adjacent to the terminal; and receiving a vertical takeoff and landing (VTOL) aircraft onto the TLOF platform when the TLOF platform is aligned with the first station and in the FATO area.

Clause 17 - The method of clause 16, further comprising: moving the TLOF platform from alignment with the first station of the terminal into alignment with a second station of the terminal; unloading from the VTOL aircraft when the TLOF platform is aligned with the second station; moving the TLOF platform from alignment with the second station of the terminal into alignment with a third station of the terminal; and performing ground service on the VTOL aircraft when the TLOF platform is aligned with the third station.

Clause 18 - The method of clause 16 or clause 17, further comprising: moving the first TLOF platform from alignment with the third station of the terminal into alignment with a fourth station of the terminal; loading into the VTOL aircraft when the TLOF platform is aligned with the fourth station; moving the TLOF platform from alignment with the fourth station of the terminal into alignment with the first station of the terminal; and causing the VTOL aircraft to take-off from the TLOF platform when the TLOF platform is aligned with the first station and in the FATO area.

Clause 19 - The method of any one of clauses 16-18, further comprising: moving the TLOF platform through a plurality of cycles around the terminal, wherein each cycle causes the TLOF platform to become aligned and subsequently unaligned with a plurality of other stations of the terminal before finally re-aligning with the first station; moving the VTOL aircraft off of the TLOF platform and into a static area because the VTOL aircraft requires operations or service and thus will not be ready to take-off from the TLOF platform at an end of a first of the cycles; and moving the VTOL aircraft back onto the TLOF platform once the operations or service are complete, wherein the VTOL aircraft is moved back during a second or subsequent one of the cycles.

Clause 20 - The method of any one of clauses 16-19, further comprising: moving the TLOF platform through a plurality of cycles around the terminal, wherein each cycle causes the TLOF platform to become aligned and subsequently unaligned with a plurality of other stations of the terminal before finally re-aligning with the first station; detaching the TLOF platform from the driver; moving the TLOF platform with the VTOL aircraft thereon into a static area once the TLOF platform is detached, wherein the TLOF platform and the VTOL aircraft are moved because the VTOL aircraft requires operations or service and thus will not be ready to take-off from the TLOF platform at an end of a first of the cycles, and wherein the TLOF platform ceases to move when in the static area; re-attaching the TLOF platform to the driver once the operations or service are complete; and moving the TLOF platform with the VTOL aircraft thereon at least partially through a second or subsequent one of the cycles.

In some examples, the movement of the vertiport system 100 may be coupled to the broader airspace management system. For example, the movement of the vertiport system 100 may be synchronized with the movement of airspace slots (e.g., demand capacity balancing) via connection to a system such as System Wide Information Management (SWIM). The synchronization of movement with airspace and DCB requirements to support the efficient and sustainable airspace network has not been done before.

While the foregoing disclosure has been described in some detail by way of illustration and example for purposes of clarity and understanding, it will be clear to one of ordinary skill in the art from a reading of this disclosure that various changes in form and detail can be made without departing from the true scope of the disclosure and may be practiced within the scope of the appended claims. For example, all the methods, systems, and/or component parts or other features thereof can be used in various combinations.

## Claims

1. A vertiport system (100), comprising:
a plurality of touchdown and lift-off, TLOF, platforms (120A-120D);
a final approach and take-off, FATO, area (125); and
a driver (135) configured to move the plurality of touchdown and lift-off platforms (120A-120D) with respect to the final approach and take-off area (125).

2. The vertiport system (100) of claim 1, further comprising a terminal (105), wherein the plurality of touchdown and lift-off platforms (120A-120D) move in a horizontal plane around the terminal (105).

3. The vertiport system (100) of claim 2, wherein the terminal (105) is divided into a plurality of stations (110A-110D), wherein the plurality of stations (110A-110D) are circumferentially offset from one another around a central vertical axis (115) through the terminal (105), and optionally, wherein the plurality of stations (110A-110D) comprise a touchdown and lift-off station (110A), an unloading station (110B), a ground service station (110C), and a loading station (110D).

4. The vertiport system (100) of claim 3, wherein the plurality of touchdown and lift-off platforms (120A-120D) are positioned radially-outward from the terminal (105) and the stations (110A-110D) with respect to the central vertical axis (115), and wherein each touchdown and lift-off platform (120A-120D) is configured to be aligned with a different one of the plurality of stations (110A-110D).

5. The vertiport system (100) of claim 3 or claim 4, wherein the plurality of stations (110A-110D) comprise a touchdown and lift-off station (110A), wherein the driver (135) is configured to move a first of the plurality of touchdown and lift-off platforms (120A-120D) into alignment with the touchdown and lift-off station (110A) and simultaneously into the final approach and take-off area (125), and wherein the first touchdown and lift-off platform (120A-120D) is configured to have a vertical takeoff and landing aircraft (130A-130D) take-off therefrom and/or land thereon when the first touchdown and lift-off platform (120A-120D) is in the final approach and take-off area (125).

6. The vertiport system (100) of any of claims 3 - 5, wherein the plurality of stations (110A-110D) comprise an unloading station (110B), wherein the driver (135) is configured to move a first of the touchdown and lift-off platforms (120A-120D) into alignment with the unloading station (110B), which allows passengers, luggage, or cargo to be unloaded from a vertical takeoff and landing aircraft (130A-130D), onto the first touchdown and lift-off platform (120A-120D), and then into the unloading station (110B).

7. The vertiport system (100) of any of claims 3 - 6, wherein the plurality of stations (110A-110D) comprise a ground service station (110C), wherein the driver (135) is configured to move a first of the plurality of touchdown and lift-off platforms (120A-120D) into alignment with the ground service station (110C), which allows ground service to be performed on a vertical takeoff and landing aircraft (130A-130D) that is positioned on the first touchdown and lift-off platform (120A-120D).

8. The vertiport system (100) of any of claims 3 - 7, wherein the plurality of stations (110A-110D) comprise a loading station (110D), wherein the driver (135) is configured to move a first of the plurality of touchdown and lift-off platforms (120A-120D) into alignment with the loading station (110D), which allows passengers, luggage, or cargo to be loaded from the loading station (110D) into a vertical takeoff and landing aircraft (130A-130D) that is positioned on the first touchdown and lift-off platform (120A-120D).

9. The vertiport system (100) of claim 1, further comprising:
a stationary terminal (105), wherein the terminal (105) is divided into a plurality of stations (110A-110D), wherein the plurality of stations (110A-110D) are circumferentially offset from one another around a central vertical axis (115) through the terminal (105), and wherein the plurality of stations (110A-110D) comprise a touchdown and lift-off station (110A), an unloading station (110B), a ground service station (110C), and a loading station (110D); and
wherein the plurality of touchdown and lift-off platforms (120A-120D) are positioned adjacent to the terminal (105), wherein the plurality of touchdown and lift-off platforms (120A-120D) are positioned radially-outward from the terminal (105) and the plurality of stations (110A-110D) with respect to the central vertical axis (115), and wherein each touchdown and lift-off platform (120A-120D) is configured to be aligned with a different one of the plurality of stations (110A-110D);
wherein the final approach and take-off area (125) is positioned adjacent to the terminal (105), wherein the final approach and take-off area (125) is stationary, wherein a first of the plurality of touchdown and lift-off platforms (120A) is configured to initially be aligned with the touchdown and lift-off station (110A) and in the final approach and take-off area (125), and wherein the first touchdown and lift-off platform (120A) is configured to have a vertical takeoff and landing aircraft (130A) land thereon when the first touchdown and lift-off platform (120A) is in the final approach and take-off area (125); and
wherein the driver (135) is configured to cause the plurality of touchdown and lift-off platforms (120A-120D) to move with respect to the terminal (105), wherein the plurality of touchdown and lift-off platforms (120A-120D) are configured to move in a horizontal plane around the central vertical axis (115), wherein the plurality of touchdown and lift-off platforms (120A-120D) are configured to move in a continuous or pulsed manner, wherein the first touchdown and lift-off platform (120A) is configured to move from alignment with the touchdown and lift-off station (110A) into alignment with the unloading station (110B) in response to a first rotational movement by the driver (135), which allows first passengers, first luggage, or first cargo to be unloaded from the vertical takeoff and landing aircraft (130A) into the unloading station (110B) of the terminal (105), wherein the first touchdown and lift-off platform (120A) is configured to move from alignment with the unloading station (110B) of the terminal (105) into alignment with the ground service station (110C) of the terminal (105) in response to a second rotational movement by the driver (135), which allows ground service to be performed on the vertical takeoff and landing aircraft (130A), wherein the first touchdown and lift-off platform (120A) is configured to move from alignment with the ground service station (110C) of the terminal (105) into alignment with the loading station (110D) of the terminal (105) in response to a third rotational movement by the driver (135), which allows second passengers, second luggage, or second cargo to be loaded from the loading station (110D) of the terminal (105) into the vertical takeoff and landing aircraft (130A), wherein the first touchdown and lift-off platform (120A) is configured to move from alignment with the loading station (110D) of the terminal (105) back into alignment with the touchdown and lift-off station (110A) of the terminal (105) in response to a fourth rotational movement by the driver (135), which brings the first touchdown and lift-off platform (120A) back into the final approach and take-off area (125), and for the vertical takeoff and landing aircraft (130A) to take-off from the first touchdown and lift-off platform (120A) when the first touchdown and lift-off platform (120A) is back in the final approach and take-off area (125).

10. The vertiport system (100) of any preceding claim, wherein one or more of:
voids are defined between each adjacent pair of the plurality of touchdown and lift-off platforms (120A-120D), or the plurality of touchdown and lift-off platforms (120A-120D) are part of a single disk with no voids therebetween;
the plurality of touchdown and lift-off platforms (120A-120D), or sub-components thereof, are also configured to move vertically to facilitate loading and unloading; and
the plurality of touchdown and lift-off platforms (120A-120D) comprise equipment for refuelling or recharging the vertical takeoff and landing aircraft (130A).

11. A method (200) for operating a vertiport system (100), the method comprising:
moving a touchdown and lift-off, TLOF, platform (120A) into alignment with a first station (110A) of a terminal (105), wherein the touchdown and lift-off platform (120A) is moved with a driver (135), wherein the touchdown and lift-off platform (120A) is within a final approach and take-off, FATO area (125) when the touchdown and lift-off platform (120A) is aligned with the first station (110A), and wherein the touchdown and lift-off platform (120A) is one of a plurality of touchdown and lift-off platforms (120A-120D) that are adjacent to the terminal (105); and
receiving a vertical takeoff and landing, VTOL, aircraft (130A) onto the touchdown and lift-off platform (120A) when the touchdown and lift-off platform (120A) is aligned with the first station (110A) and in the final approach and take-off area (125).

12. The method (200) of claim 11, further comprising:
moving the touchdown and lift-off platform (120A) from alignment with the first station (110A) of the terminal (105) into alignment with a second station (110B) of the terminal (105);
unloading from the vertical takeoff and landing aircraft (130A) when the touchdown and lift-off platform (120A) is aligned with the second station (110B);
moving the touchdown and lift-off platform (120A) from alignment with the second station (110B) of the terminal (105) into alignment with a third station (110C) of the terminal (105); and
performing ground service on the vertical takeoff and landing aircraft (130A) when the touchdown and lift-off platform (120A) is aligned with the third station (110C).

13. The method (200) of claim 12, further comprising:
moving the first touchdown and lift-off platform (120A) from alignment with the third station (110C) of the terminal (105) into alignment with a fourth station (110D) of the terminal (105);
loading into the vertical takeoff and landing aircraft (130A) when the touchdown and lift-off platform (120A) is aligned with the fourth station (110D);
moving the touchdown and lift-off platform (120A) from alignment with the fourth station (110D) of the terminal (105) into alignment with the first station (110A) of the terminal (105); and
causing the vertical takeoff and landing aircraft (130A) to take-off from the touchdown and lift-off platform (120A) when the touchdown and lift-off platform (120A) is aligned with the first station (110A) and in the final approach and take-off area (125).

14. The method (200) of claim 12 or claim 13, further comprising:
moving the touchdown and lift-off platform (120A) through a plurality of cycles around the terminal (105), wherein each cycle causes the touchdown and lift-off platform (120A) to become aligned and subsequently unaligned with a plurality of other stations (110A-110D) of the terminal (105) before finally re-aligning with the first station (110A);
moving the vertical takeoff and landing aircraft (130A) off of the touchdown and lift-off platform (120A) and into a static area (140) because the vertical takeoff and landing aircraft (130A) requires operations or service and thus will not be ready to take-off from the touchdown and lift-off platform (120A) at an end of a first of the cycles; and
moving the vertical takeoff and landing aircraft (130A) back onto the touchdown and lift-off platform (120A) once the operations or service are complete, wherein the vertical takeoff and landing aircraft (130A) is moved back during a second or subsequent one of the cycles.

15. The method (200) of any of claims 11 - 14, further comprising:
moving the touchdown and lift-off platform (120A) through a plurality of cycles around the terminal (105), wherein each cycle causes the touchdown and lift-off platform (120A) to become aligned and subsequently unaligned with a plurality of other stations (110A-110D) of the terminal (105) before finally re-aligning with the first station (110A);
detaching the touchdown and lift-off platform (120A) from the driver (135);
moving the touchdown and lift-off platform (120A) with the vertical takeoff and landing aircraft (130A) thereon into a static area (140) once the touchdown and lift-off platform (120A) is detached, wherein the touchdown and lift-off platform (120A) and the vertical takeoff and landing aircraft (130A) are moved because the vertical takeoff and landing aircraft (130A) requires operations or service and thus will not be ready to take-off from the touchdown and lift-off platform (120A) at an end of a first of the cycles, and wherein the touchdown and lift-off platform (120A) ceases to move when in the static area (140);
re-attaching the touchdown and lift-off platform to the driver (135) once the operations or service are complete; and
moving the touchdown and lift-off platform (120A) with the vertical takeoff and landing aircraft (130A) thereon at least partially through a second or subsequent one of the cycles.
